# EUROPEAN PATENT APPLICATION

(11) **EP 2 620 360 A1**
(43) Date of publication of application: **31.07.2013**
(21) Application number: 12382023.5
(22) Date of filing: 24.01.2012
(51) Int. Cl.: B64C 1/06, B64D 45/02

(54) **Fire protection device for aircraft**

(71) Applicant: EADS Construcciones Aeronauticas, S.A., 28022 Madrid (ES)
(72) Inventor: Campo Caballero, Fernando, 28020 Madrid (ES); Aragoneses Manso, Rubén, 28806 Alcalá de Henares (ES)
(74) Representative: Elzaburu Marquez, Alberto

(57) **Abstract**

Joint attaching a structural element (10) to a composite part (20) comprising a metallic attachment (40), this joint being subjected to a fire source on one of its sides, the fire side, the joint comprising a retaining device (50) locate at the side of the joint opposite to the fire side, the cold side, the retaining device (50) comprising a first surface (51) that is in contact with the metallic attachment (40), and a second surface (52) which is in contact with the composite part (20), the second surface (52) having a bigger area than the area of the first surface (51), the retaining device (50) being made of a material with a high thermal conductivity. The invention also refers to an aircraft comprising such a joint.

## Description

### FIELD OF THE INVENTION

The present invention relates to a device use in aircraft, in particular to joints attaching a structural element and a composite part in an aircraft, such that these joints are subjected to structural loads and are provided with fire resistance.

### BACKGROUND

At present, composite materials are used more and more frequently in aircraft structures, due to the weight restrictions in present aircraft design. In some parts of the aircraft structure, metallic elements are joined to elements made in composite material. In some cases, these joints are subjected to high structural loads coming from the aircraft. In case of a fire event on these joints, the composite elements reduce highly their strength, as the strength to forces, particularly to perpendicular forces, has been found to be very critical in composite material structures subjected to high temperatures. Therefore, in cases as the ones described, the high strength reduction in the composite material element could produce the detachment of the metallic element from the composite material element to which it is joined, which would produce a potential failure of the aircraft structure.

This problem is of particular relevance in cases where these joints are located in the aircraft engine nacelle.

It is known in the state of the art the use of shields or coatings onto the structural aircraft elements in order to protect them against fire. Usually, these structural elements comprise a thermal blanket or a coating made of a material having low thermal conductivity in order to the temperature of the element or part that is to be protected. These known solutions have the problem, however, of weight input on the overall weight of the aircraft. Besides, these solutions are costly, and require strong maintainability revisions, which are also costly.

Particularly in cases where the aircraft elements joined are metallic and made of composite material, and are elements that need to be protected against fire, and are subjected to high loads, particularly to high perpendicular bads, the use of the known solutions of providing coatings made of an isolating material, is not applicable, as it has the problems of high cost and weight.

The present invention is intended to solve the above-mentioned disadvantages, providing a solution applicable to the cases mentioned below.

### SUMMARY OF THE INVENTION

The purpose of the present invention is to provide a device used in aircraft, in particular a joint attaching a structural element to a composite part in an aircraft, this joint comprising a metallic attachment and being is subjected to structural loads. The joint according to the invention comprises a retaining device ensuring the fire resistance of the mentioned joints.

According to the invention, the joint is subjected to a fire source on one of its sides, called the *fire side,* such that the retaining device is located at the side of the joint that is opposite to the fire side, called the *cold side,* particularly in the external side of the aircraft, subjected to the external air stream. The retaining device of the invention comprises a first surface that is in contact with the metallic attachment, this first surface receiving the load from the metallic attachment as a reaction load to the load to which the metallic attachment is subjected, and also comprises a second surface which is in contact with the composite part in the aircraft, in particular with the side of the composite part which is opposite to the fire source. According to the invention, the second surface of the retaining device has a bigger area than the area of the first surface of the retaining device.

With the above-mentioned structure, the retaining device in the joint of the invention works transmitting the load received in its first surface to its second surface, which is in contact with the side of the composite part that is opposite to the fire source, therefore being the side of the composite part having a lower temperature compared to the side which is in contact with the fire source, that has a higher temperature. Thus, the retaining device in the joint of the invention transmits the load to the side of the composite part with a lower temperature, having a higher strength compared to the side with a higher temperature.

Besides, because the area of the second surface is bigger than the area of the first surface in contact with the metallic attachment, the pressure over the composite part decreases.

In this way, the joint behaviour between the metallic attachment and the composite part is improved, as joints in composite material have a critical behaviour working at high temperatures and with forces perpendicular to the composite surface, that is, pressure forces.

### BRIEF DESCRIPTION OF DRAWINGS

The foregoing objects and many of the attendant advantages of this invention will become more readily appreciated as the same becomes better understood by reference to the following detailed description when taken in conjunction with the accompanying drawings, wherein:
Figure 1 shows a sectional view of a joint subjected to structural loads attaching a metallic element and a composite material element, according to the known prior art.
Figure 2 shows a sectional view of the joint of Figure 1 of the prior art subjected to fire, also showing the distribution of the heat in the structure and joint.
Figure 3 shows a sectional view of the main components in a joint attaching a structural element to a composite part in an aircraft being provided with fire resistance, according to the present invention.

### DETAILED DESCRIPTION OF THE INVENTION

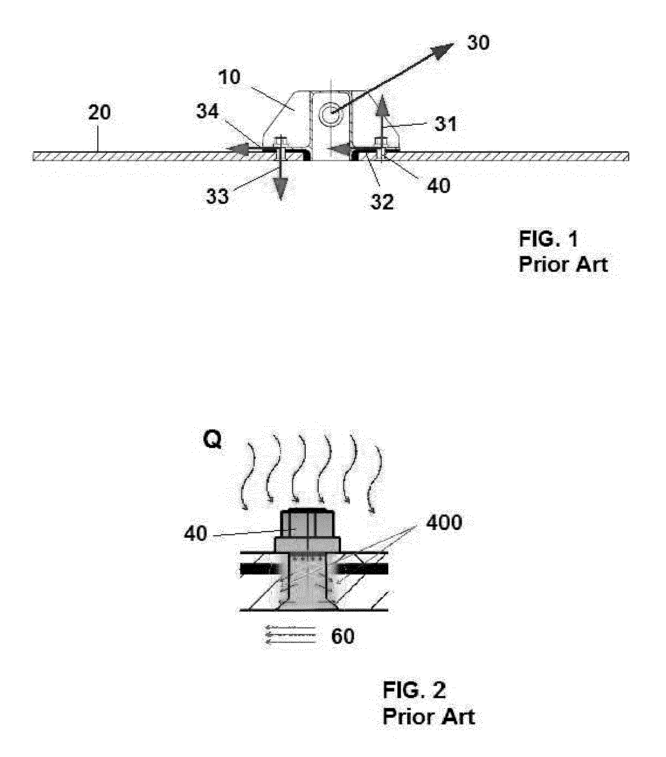

In some parts of the aircraft structure, as shown in Figure 1, structural elements 10, typically metallic, need to be joined to elements or parts 20 made in composite material. In some cases, these structural elements 10 are subjected to high structural loads 30 coming from the aircraft. Usually, the structural elements 10 are joined to the composite parts 20 by means of metallic attachments 40, typically rivets or bolts. In case of a fire event, the composite parts 20 reduce highly their strength, as the strength to forces, particularly to perpendicular forces, has been found to be very critical in composite material structures subjected to high temperatures, as it is the case showed in Figures 1 and 2 in the prior art.

Usual practice in industry is to shield the structural elements 10 subjected to fire by using a thermal blanket or a coating, comprising an isolating material having a low thermal conductivity in order to decrease the temperature on the part that is to be protected.

As explained above, the problem is found in composite aero structures, particularly in Carbon Fiber Reinforced Polymer (CFRP) aero structures, which are exposed to fire, when there exists a structural element 10 joined to a composite part 20 by metallic attachments 40, as depicted in Figure 1. The load 30 to which the structural element 10 is subjected introduces forces 31, 32 and 33, 34 into the metallic attachments 40. This makes that the composite part 20 has to withstand forces which are perpendicular to the composite skin (reaction forces to 31 and 33). More in particular, special attention should be paid to the reaction to the force 33 on the composite part 20, which will be pulling the composite skin (pull-out load). If a fire was present, the metallic attachments 40 would transmit the fire temperature to the surrounding composite skin of the composite part 20.

As showed in Figure 2, in cases where the metallic attachments 40 are subjected to high temperatures coming from the fire exposure, it is possible that the temperature in areas 400 of the composite parts 20 becomes near or above the Glass Transition Temperature (Tg). In this case, the strength of the local skin in area 400 of the composite parts 20 surrounding the metallic attachment 40 diminishes and the reaction to the force 33 on the composite part 20 might not be withstood. This could produce the detachment of the area 400 from the composite skin in the composite part 20 and, consequently, a potential failure of the aero structure.

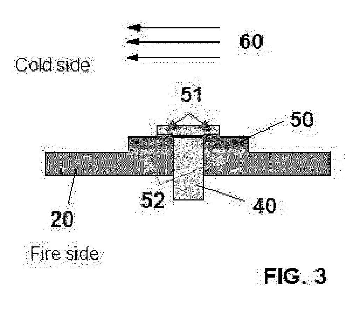

Thus, the purpose of the present invention is to provide a joint subjected to structural loads attaching a structural element 10, typically metallic, to a composite part 20, the joint comprising a metallic attachment 40 and being subjected to a fire source on one of its sides, the fire side. According to the invention, the joint comprises a retaining device 50 providing fire protection to these joints (see Figure 3).

According to the invention, the joint is subjected to a fire source on one of its sides, the fire side, such that the retaining device 50 is located in the side of the aircraft which is opposite to the fire source, the cold side (see Figure 3), particularly in the external side of the aircraft, subjected to the external air stream 60. The retaining device 50 comprises a first surface 51 that is in contact with the metallic attachment 40, this first surface 51 receiving the load from the metallic attachment 40 as a reaction load to the load to which the metallic attachment 40 is subjected, and also comprises a second surface 52 which is in contact with the composite part 20 in the aircraft, in particular with the side of the composite part 20 which is opposite to the fire source. According to the invention, the second surface 52 of the retaining device 50 has a bigger area than the area of the first surface 51 of the retaining device 50.

With the above-mentioned structure, the retaining device 50 works transmitting the load received in its first surface 51 to its second surface 52, which is in contact with the side of the composite part 20 that is opposite to the fire source, therefore being the side of the composite part 20 having a lower temperature compared to the side which is in contact with the fire source, that has a higher temperature. Thus, the retaining device 50 transmits the load to the side of the composite part 20 with a lower temperature, having a higher strength compared to the areas 400 of the composite parts 20 surrounding the metallic attachment 40.

Besides, because the area of the second surface 52 is bigger than the area of the first surface 51 in contact with the metallic attachment 40, the pressure over the composite part 20 decreases.

In this way, the joint behaviour between the metallic attachment 40 and the composite part 20 is improved, as joints in composite material have a critical behaviour working at high temperatures and with forces perpendicular to the composite surface, that is, pressure forces.

The retaining device 50 in the joint of the invention solves the above-mentioned problems by the following means:
a) The pull-out load on the composite part 20 is redistributed to a non-damaged surface of the composite skin: the solution known in the art relies on the strength of the composite skin just on the area in contact with the heads of the metallic attachments 40; however, this surrounding area of the composite part 20 is damaged by the high temperature or has a diminished (lower?) strength. The invention proposed transmits this pull-out load to a greater surface of the composite skin in a better mechanical condition. This has been found very critical in structures of composite parts 20, where the strength to perpendicular forces highly diminishes due to the fire temperature.
b) In case of the presence of an external airflow 60 in the side opposite to the fire (applicable in most of the cases since it is the normal flight condition, with an outside air stream), the invention takes benefit of this ventilation to establish a cold attachment between the metallic attachment 40 and the composite part 20. The relevance of this fact is that composite skin is very sensitive to the high temperatures and loses its mechanical properties as it reaches the Glass Transition Temperature (Tg).

The joint of the invention develops a retaining device 50 on the cold side of the composite part 20, meeting the following requirements:
- the retaining device 50 transmits the attachment load to the side of the composite part 20 not subjected to fire (cold side);
- the area of the second surface 52, which is in contact with the side of the composite part 20 that is opposite to the fire source is bigger than the total area of the first surface 51 in contact with the metallic attachment 40 transmitting the load to the retaining device 50, particularly greater than three times the total area of the first surface 51;
- the material of the retaining device 50 must have a high thermal conductivity, particularly greater than 10 W/mK.

The retaining device 50 in the joint provides an effective heat transfer, by conduction heat transfer across the metallic attachment 40 due to the high thermal conductivity of the material in the retaining device 50, and by convection heat transfer due to a larger total area in contact with air on the cold side, thereby lowering the temperature of all the metallic parts of the joint (typically, the metallic attachment and the structural element 10), and thus reducing the heat transfer towards the composite part 20 both across the areas 400 of the composite parts 20 surrounding the metallic attachment 40 and across the second surface 52 of the retaining device 50 which is in contact with the cold side of the composite part 20.

Furthermore, in presence of an external airflow 60 (usual flight condition), together with the high thermal conductivity of the retaining device 50 and the enhanced heat transfer due to the forced convection and a larger surface exposed to the cold external airflow 60, a cold attachment of the structural element 10 to the composite part 20 is provided.

Besides, the fire testing made with the retaining device 50 of the joint of the invention is effected in accordance with aerospace regulations, in particular meeting ISO 2685, AC 20-135 standards.

Although the present invention has been fully described in connection with preferred embodiments, it is evident that modifications may be introduced within the scope thereof, not considering this as limited by these embodiments, but by the contents of the following claims.

## Claims

1. Joint attaching a structural element (10) to a composite part (20) comprising a metallic attachment (40), this joint being subjected to a fire source on one of its sides, the fire side, **characterized in that** it comprises a retaining device (50) located at the side of the joint opposite to the fire side, the cold side, the retaining device (50) comprising a first surface (51) that is in contact with the metallic attachment (40), and a second surface (52) which is in contact with the composite part (20), the second surface (52) having a bigger area than the area of the first surface (51), the retaining device (50) being made of a material with a high thermal conductivity.

2. Joint according to claim 1 wherein the area of the second surface (52) is at least three times bigger than the area of the first surface (51).

3. Joint according to any of claims 1-2 wherein the material of the retaining device (50) has a thermal conductivity of at least 10 W/mK.

4. Joint according to any of the previous claims wherein the composite part (20) is designed to work under temperature conditions lower than its Glass Transition Temperature (Tg).

5. Joint according to any of the previous claims wherein an airflow (60) is present on the cold side.

6. Joint according to any of the previous claims wherein the metallic attachment (40) are rivets or bolts.

7. Joint according to any of the previous claims wherein the composite material in the composite part (20) is a carbon fibre reinforced polymer.

8. Joint according to any of the previous claims wherein the composite material in the composite part (20) has a Glass Transition Temperature (Tg) in the range of 50°C to 95°C.

9. Joint according to any of the previous claims wherein the composite material in the composite part (20) forms a skin of an aircraft.

10. Aircraft comprising a joint according to any of the previous claims.
